# EUROPEAN PATENT APPLICATION

(11) **EP 4 686 283 A2**
(43) Date of publication of application: **28.01.2026**
(21) Application number: 25221714.6
(22) Date of filing: 10.07.2020
(51) Int. Cl.: H04W 72/04

(54) **UE-TO-NETWORK SIGNALLING OF UE CAPABILITIES TRIGGERED BY SIM BECOMING IDLE OR ACTIVE**

(62) Divisional of application: 20185218.3
(71) Applicant: Nokia Technologies Oy, 02610 Espoo (FI)
(72) Inventor: Aby K, Abraham, 686669 Kerala (IN); Selvaganapathy, Srinivasan, 66 Bangalore (IN)
(74) Representative: Swindell & Pearson Limited

(57) **Abstract**

Apparatuses and methods in a communication system are provided. User equipment maintains (300) a primary capability to be used when one subscription identity of the user equipment is active and a secondary capability to be used when more than one subscription identity of the user equipment is active and transmits (302), based on Radio Resource Connection status of one or more subscription identities of the user equipment, to a Radio Access Network node the user equipment is connected to, an indication as to which capability selected from the primary or secondary capability is to be used

## Description

### Field

The exemplary and non-limiting embodiments of the invention relate generally to wireless communication systems. Embodiments of the invention relate especially to apparatuses and methods in wireless communication networks.

### Background

Wireless communication systems are under constant development. One aspect under development is user terminals having more than one subscription identities. There may be users who have the need to utilise more than one subscription in a same terminal. For example, one subscription maybe for home use and another for work. The communication system should be prepared to handle these situations in an efficient manner.

Wireless communication systems usually comprise wireless user terminals, a radio access network, and a core network. These components of the system exchange messages to establish signalling connections between them to facilitate data transfer from one communication point to another communication point. The exchange of signalling messages between different components of the system should be as reliable and efficient regarding the use of communication system resources as possible.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there are provided apparatuses of claims 1,8 and 13.

According to an aspect of the present invention, there are provided methods of claims 15, 16 and 17.

According to an aspect of the present invention, there are provided computer programs comprising instructions of claims 18, 19 and 20.

One or more examples of implementations are set forth in more detail in the accompanying drawings and the description below. Other features will be apparent from the description and drawings, and from the claims. The embodiments and/or examples and features, if any, described in this specification that do not fall under the scope of the independent claims are to be interpreted as examples useful for understanding various embodiments of the invention.

### List of drawings

Embodiments of the present invention are described below, by way of example only, with reference to the accompanying drawings, in which
Figures 1 and 2 illustrate examples of simplified system architecture of a communication system;
Figures 3, 4A and 4B are flowcharts illustrating embodiments;
Figures 5 and 6 are signalling charts illustrating embodiments;
Figures 7, 8 and 9 are flowcharts illustrating embodiments;
Figures 10, 11 and 12 illustrate simplified examples of apparatuses applying some embodiments of the invention.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain features, structures, units, modules etc. that have not been specifically mentioned.

Some embodiments of the present invention are applicable to a user terminal, a communication device, a base station, eNodeB, gNodeB, a distributed realisation of a base station, a network element of a communication system, a corresponding component, and/or to any communication system or any combination of different communication systems that support required functionality.

The protocols used, the specifications of communication systems, servers and user equipment, especially in wireless communication, develop rapidly. Such development may require extra changes to an embodiment. Therefore, all words and expressions should be interpreted broadly and they are intended to illustrate, not to restrict, embodiments.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. The embodiments may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

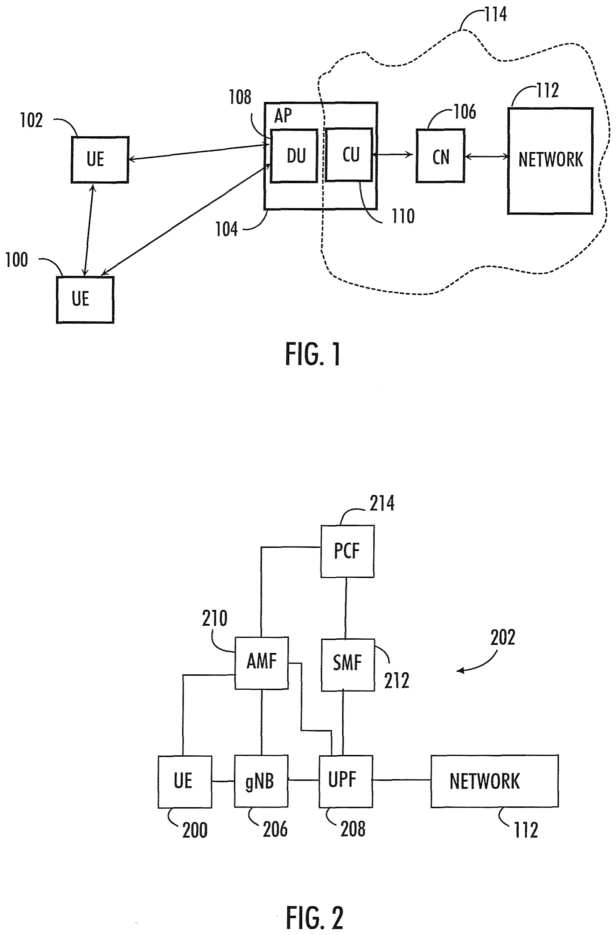

Fig. 1 depicts examples of simplified system architectures only showing some elements and functional entities, all being logical units, whose implementation may differ from what is shown. The connections shown in Fig. 1 are logical connections; the actual physical connections may be different. It is apparent to a person skilled in the art that the system typically comprises also other functions and structures than those shown in Fig. 1.

The embodiments are not, however, restricted to the system given as an example but a person skilled in the art may apply the solution to other communication systems provided with necessary properties.

The example of Fig. 1 shows a part of an exemplifying radio access network.

Fig. 1 shows devices 100 and 102. The devices 100 and 102 may, for example, be user devices or user terminals. The devices 100 and 102 are configured to be in a wireless connection on one or more communication channels with a node 104. The node 104 is further connected to a core network 106. In one example, the node 104 may be an access node such as (e/g)NodeB serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 106 (CN or next generation core NGC).

The device (also called a subscriber unit, user device, user equipment (UE), user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device ( e.g. a portable or non-portable computing device) that includes wireless mobile communication devices operating with or without an universal subscriber identification module (USIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network, or a VolP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 108) and non-real time functions being carried out in a centralized manner (in a centralized unit, CU 110).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

Fig.2 illustrates an example of a communication system based on 5G network components. A user terminal or user equipment 200 communicating via a 5G network 202 with a data network 112. The user terminal 200 is connected to a Radio Access Network RAN node, such as (e/g)NodeB 206 which provides the user terminal a connection to the network 112 via one or more User Plane Functions 208. The user terminal 200 is further connected to Core Access and Mobility Management Function, AMF 210, which is a control plane core connector for (radio) access network and can be seen from this perspective as the 5G version of Mobility Management Entity, MME, in LTE. The 5G network further comprises Session Management Function, SMF 212, which is responsible for subscriber sessions, such as session establishment, modify and release, and a Policy Control Function 214 which is configured to govern network behavior by providing policy rules to control plane functions.

Each user terminal (or user equipment, UE) hardware has unique identifier. The identifier may be denoted as the permanent equipment identifier, PEI, or international mobile equipment identifier, IMEI.

User equipment wishing to utilise services of a wireless communication system such as a cellular network, needs to have a subscription from the operator of the communication system. Typically, a subscription is bounded to a physical Universal Subscriber Identity Module, USIM, card and the subscription can be identified by a unique subscription permanent identifier, SUPI, denoted also an international mobile subscriber identity, IMSI. SUPI consists of the mobile country code (MCC), mobile network code (MNC), and the mobile subscription identification number (MSIN).

There are also so-called embedded USIMs or electronic SIMs, eSIM, available. An eSIM is a digital USIM that allows the owner to activate a subscription to a communication system without having to use a physical USIM card.

In most cases, user equipment has only one subscriber identity, stored in the USIM card inserted in the terminal. However, there are numerous user equipment on the market which have more than one slot for USIM cards or eSIM support and are capable of supporting multiple subscriber identities. These user equipment may be denoted as multi-USIM (MUSIM) devices.

A MUSIM user equipment registers to the network using one or more subscription identities stored in the respective USIMs. The subscription identities are associated with respective UE radio protocol stack instances, which can be in any of the RRC states RRC_IDLE, RRC_INACTIVE, or RRC_CONNECTED.

MUSIM user equipment are usually divided into two main types depending on the supported simultaneous RRC_states on the USIMs.

First, Dual SIM Dual Standby (DSDS) or Multi USIM Multi Standby (MUMS) devices are registered with two or more independent subscriber IDs (USIMs) and can be in RRC_IDLE mode on all USIMs. However, it can only be on RRC_CONNECTED mode with a single USIM at a given time.

Second, Dual SIM Dual Active (DSDA) or Multi USIM Multi Active (MUMA) MUSIM devices are registered with two or more independent subscriber IDs (USIMs) and can be in RRC_IDLE mode on all USIMs. Further, the device can maintain RRC_CONNECTED mode activities on all USIMs.

In addition, behaviour of a MUSIM device with respect to the simultaneous handling of multiple USIMs may depend on the capabilities of the UE. Three types may be defined as follows:
Type 1: SingleRx / SingleTx: The UE is only capable of receiving traffic from one network and and/or transmitting traffic to one network at a time.
Type 2: DualRx / SingleTx: The UE is capable of simultaneously receiving traffic from two networks but can transmit to only one network at a time.
Type 3: DualRx /DualTx: The UE is capable of simultaneously receiving and/or transmitting to/from two networks.

A DSDA MUSIM UE maybe in a situation, where it is providing data services from one USIM (USIM-A) and simultaneous voice services from other USIM (USIM-B).

In following, we refer the UE radio protocol instance associated with USIM-A as UE A and the UE radio protocol instance of USIM-B as UE-B.

When UE-A establishes RRC connection, network may configure different features at network such as dual connectivity, carrier aggregation, MIMO etc., based on the UE capability already available with PLMN-A (the Public Land Mobile Network the UE-A is connected to).

When UE-B also moves into connected mode, the UE-A needs to inform its network about the change and also to reduce the capability on its connected mode operation at UE-A in PLMN-A. This requires additional signalling exchange for reduced capability operation. Moreover, the extend of reduced capability reduction needs to be controlled and co-ordinated. The capability also needs to be switched back when the situation of one single USIM active is resumed.

Below, a reliable signalling mechanism between UE, RAN node and network is proposed.

In an embodiment, a MUSIM UE which supports DSDA operation or which supports reduction in capabilities for efficient MUSIM operation, may indicate to the network that it has multiple set of capabilities: a primary capability which includes all of its radio capabilities and one or more secondary capabilities which are a subset/restriction of the primary capability. In an embodiment, the primary capability is used when one subscription identity is active and one or more secondary capabilities are to be used when more than one subscription identity is active.

In an embodiment, the UE informs the RAN node which capability is to be used.

In general, the properties of capabilities that could change between primary and secondary capability may comprise various properties related to processor and memory usage of user equipment, radio frequency capabilities, operation of the user equipment on physical layer and protocol layers, for example.

In an embodiment, the properties of the capabilities may comprise protocol-specific capabilities (Medium Access Control/Radio Link Control/Packet Data Convergence Protocol/Service Data Adaptation Protocol based capabilities). This is because the processing capability and memory capability could be also shared between two subscriptions. If only one subscription is connected, UE may be allowed to use entire capabilities while a subset has to be relinquished when other subscription moves to connected. Examples of such parameters could be supported max data rate, total layer 2 buffer size and maxNumberROHC-ContextSessions-parameter.

In an embodiment, the properties of the capabilities may comprise Physical layer capabilities (Receiver, Multiple Input Multiple Output (MIMO), and transmission mode (TM), capabilities, feedback, codebooks, for example.) UE may not support higher TM or MIMO or other PHY capabilities when more than one RRC connections are active. If only a single RRC connection is present, the UE can support additional layers of MIMO or transmission modes. As an example, parameters in question may comprise maxNumberRxBeam, maxNumberRxTxBeamSwitchDL, maxNumberCSI-RS-SSB-BFR, groupBeam-Reporting, channelBW-90mhz, maxNumberMIMO-LayersPDSCH, supported-BandwidthDL supportedModulationOrderDL, supportedSubCarrierSpacingDL, for example.

In an embodiment, the properties of the capabilities may comprise radio frequency (RF) capabilities (transmission band combinations and capabilities that are per band combination). When more than one connection is active, some part of the RF is needed for all RRC connections. Bands supported, carrier aggregation or dual connectivity capabilities like the band combinations supported will change depending upon how many subscription identities have RRC connection. Examples include bandNR, ca-BandwidthClassDL-NR, ca-BandwidthClassUL-NR, ca-ParametersNR, mrdc-Parameter, supportedBandwidthCombinationSet, channelBWs-DL, channelBWs-UL etc.

In an embodiment, the properties of the capabilities may comprise measurement specific capabilities. Measurement gaps may not be needed with a single connection while they may be needed for multiple connections.

In an embodiment, the properties of the capabilities may further comprise Inter-RAT capabilities (e.g. frequency bands supported by inter-RAT). This is similar to RF capabilities, and can change based on the number of connections. Examples include bandEUTRA, ca-ParametersEUTRA, ca-BandwidthClassDL-EUTRA, ca-BandwidthClassUL-EUTRA etc., considering the current RAT as NR and other RAT as EUTRA, for example.

In an embodiment, the properties of the capabilities may comprise feature specific capabilities. UE may not support all the features when there are more than one RRC connection active. Examples of feature specific capabilities may comprise
1. Multimedia Broadcast Multicast Service (MBMS),
2.UE receiver features (minimum mean square error (MMSE) with Interference Rejection Combining (IRC) receiver, MMSE-IRC downlink Control Channel interference mitigation receiver for UEs with 4 receiver antenna ports, Single-user MIMO interference mitigation advanced receiver for UEs with 2 receiver antenna ports, Single-user MIMO interference mitigation advanced receiver for UEs with 4 receiver antenna ports, for example) and
3. Sidelink features (Sidelink Relay UE operation, Sidelink Remote UE operation, Sidelink discovery gap)

In addition to the radio capabilities, some of the Non-access stratum (NAS) properties also may change when multiple subscriptions set up RRC connections. These may comprise the supported codecs, device properties and some additional assistance information related to the new connection in other USIM. For example, if one USIM has a voice call, a new voice call may not be accepted. This information could be sent as a NAS Protocol Data Unit (PDU) from the UE and the RAN node could directly relay it to the core network.

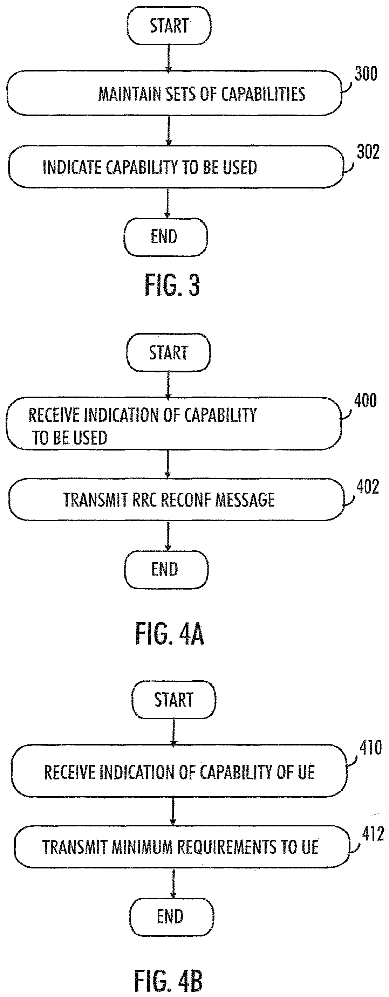

The flowchart of Fig. 3 illustrates an embodiment. The flowchart illustrates an example of the operation of an apparatus. In an embodiment, the apparatus may be a MUSIM user equipment 200, a part of a MUSIM user equipment or any other apparatus capable of executing following steps.

In an embodiment, the user equipment maintains or stores in the user equipment a plurality of subscription identities. The user equipment may have multiple USIMs installed, for example.

In step 300, the user equipment is configured to maintain a primary capability to be used when one subscription identity is active and a secondary capability to be used when more than one subscription identity is active.

In step 302, the user equipment is configured to transmit, based on Radio Resource Connection status of one or more subscription identities, to a Radio Access Network (RAN) node the user equipment is connected to, an indication as to which capability selected from the primary or secondary capability is to be used.

In an embodiment, user equipment is configured to indicate to a network that the user equipment is able to communicate using more than one capability, receive from the network minimum requirements for a secondary capability, and create the secondary capability based on the minimum requirements received from the network.

In an embodiment, user equipment is configured to receive from the RAN node at least one Radio Resource Control reconfiguration message in accordance with the capability to be used.

The flowchart of Fig. 4A illustrates an embodiment. The flowchart illustrates an example of the operation of an apparatus. In an embodiment, the apparatus may be a RAN node 206, a part of a RAN node or any other apparatus capable of executing following steps.

In step 400, the apparatus is configured to receive from a user equipment an indication of a primary or secondary capability to be used based on Radio Resource Connection status of one or more subscription identities of the user equipment.

In step 402, the apparatus is configured to transmit to the user equipment a Radio Resource Control reconfiguration message in accordance with the capability to be used.

In an embodiment, the apparatus is configured to receive from user equipment indication of a change in the capability to be used selected from the primary or secondary capability, request from the core network data on the capability to be used and prepare and transmit, based on the capability, a Radio Resource Control reconfiguration message to the user equipment in accordance with the capability to be used.

The flowchart of Fig. 4B illustrates an embodiment. The flowchart illustrates an example of the operation of an apparatus. In an embodiment, the apparatus may be a Core Access and Mobility Management Function, AMF 210, or a part of an AMF or any other apparatus capable of executing following steps.

In step 410, the apparatus is configured to receive from a user equipment an indication that the user equipment is able to communicate using more than one capability.

In step 412, the apparatus is configured to transmit to the user equipment minimum requirements for a secondary capability.

In an embodiment, the apparatus receives from a Radio Access Network node information on primary and secondary capabilities of a user equipment and stores the information,

In an embodiment, the apparatus transmits to the RAN node information on primary and/or secondary capability in connection with handover or context setup of the user equipment.

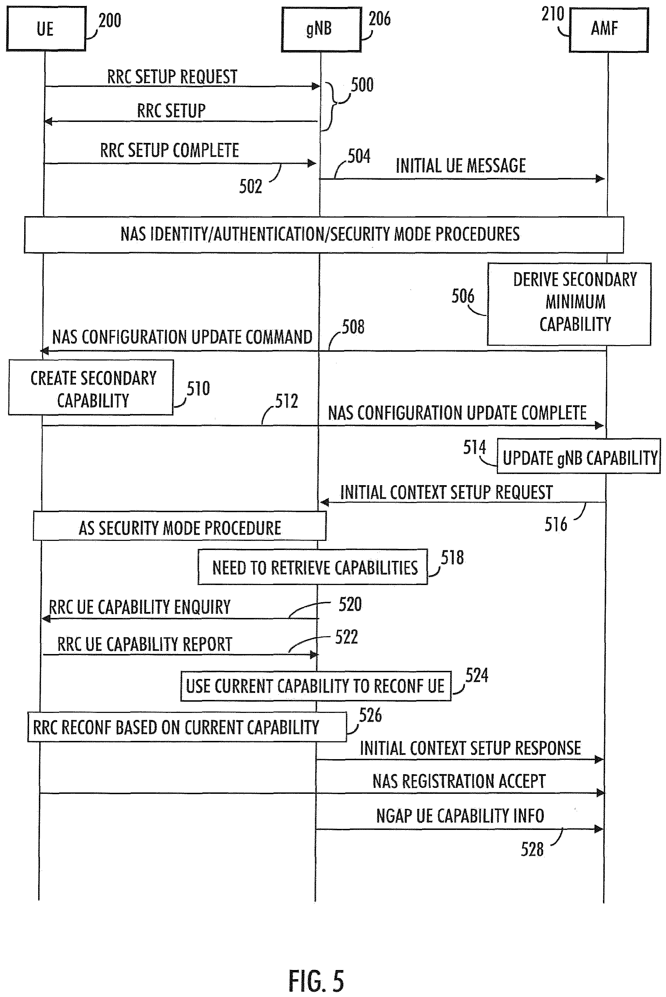

Fig. 5 is a signalling chart illustrating an embodiment. The chart illustrates signalling between UE 200, a RAN node gNB 206 and the AMF 210 of the network. The flowchart illustrates an example of establishing secondary capabilities. In this example, the user equipment comprises two USIMS, USIM-A and USIM-B.

The UE 200 has performed an RRC set up 500 with RAN node. The UE transmits 502 to RAN node a NAS message indicating it has multiple capabilities. In this example, the indication is in an RRC setup complete message which comprises a NAS registration request with a MUSIM assistance info with a field isSecondarycapabilitypresent=TRUE.

The RAN node transmits 504 an Initial UE registration request to the AMF.

As a response to the request, based on USIM-A subscription requirements, the AMF may decide 506 whether UE can be allowed with a reduced set of capabilities and how much reduction in capabilities is acceptable. In an embodiment, the AMF derives a minimum set of requirements (MinimumCapability) for the secondary capability of the UE.

In an embodiment, the AMF is configured to send to the UE a message 508 informing the minimum set of requirements. In an embodiment, the message is a NAS message, such as a configuration update command, including a MinimumCapability field. The UE is configured to create 510 secondary capability based on the message sent by the AMF and transmit an indication 512 to AMF that the secondary capability has been created. In an embodiment, the UE transmits a NAS Configuration Update Complete message.

The AMF updates 514, 516 the RAN node that UE is having secondary capability. In an embodiment, the updating may be performed utilising NGAP messages such as NGAP Initial Context Setup Request, for example.

While retrieving 518 the UE capabilities, the RAN node may request 520 the UE to report secondary capabilities, through a boolean IE reportSecondaryCapabilities field in an RRC UE Capability Enquiry-message. UE may respond 522 by transmitting a UE capability information message including primary and secondary capabilities to the RAN node, and indicate its current capability selected from the primary or secondary capability.

The RAN node may be configured to reconfigure 524, 526 UE based on the received current capabilities. In an embodiment, the RAN node will also transmit 528 the received capabilities including secondary capabilities to AMF.

When a handover to another RAN node is about to be executed, AMF may be configured to provide the received secondary capabilities to the new RAN node. This means that exchange of secondary capabilities needs to happen only once during an attach to the network. In an embodiment, the RAN node may also transmit to the new RAN node secondary capability of a handovering UE in an Xn HO Request message during handover and an Xn Information Transfer message during RRC resume (inactive to connected transition).

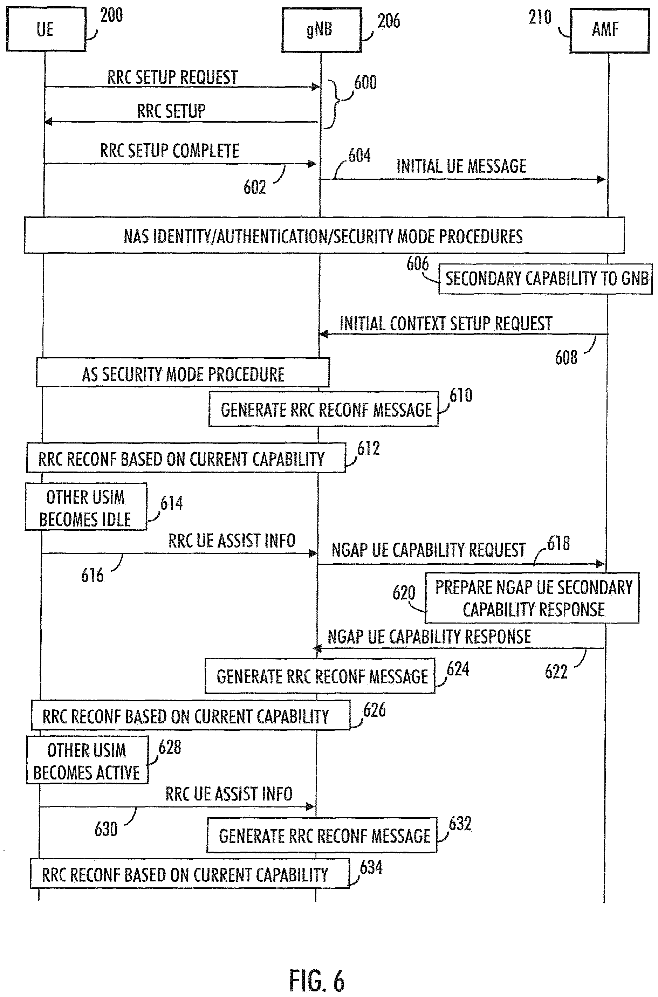

Fig. 6 is a signalling chart illustrating an embodiment. The chart illustrates signalling between user equipment, UE, a RAN node and the AMF of the network. The flowchart illustrates an example of signalling during RRC setup and capability switch between primary and secondary capabilities. Also in this example, the user equipment comprises two USIMS, USIM-A and USIM-B.

The figure illustrates how a MUSIM DSDA user equipment signals secondary capability during transition from idle to connected and during capability change depending on the other USIM's transition from idle to connected state (or from idle/inactive to connected state).

In this example, the user equipment is a MUSIM device which supports different capability sets for DSDA. The UE 200 has performed RRC set up 600 with RAN node. In this example, the UE may utilise an enumerated variable, currentCapability, during RRC setup procedure to indicate the capability. In the absence of explicit indication, the RAN node is configured to interpret that the UE is having a primary capability. In the example embodiment of Fig. 6, the UE transmits to the RAN node in an RRC Setup Complete message 602 an enumerated variable, "currentCapability = secondary".

As a response to receiving "currentCapability = secondary" from the UE, the RAN node indicates in the NGAP Initial UE message 604 to AMF that secondary capability is available/active at the UE. The RAN node may receive secondary capability from AMF through a NGAP initial context setup request 606, 608. In an embodiment, the AMF may include both primary and secondary capabilities in the NGAP initial context setup request.

The RAN node will reconfigure 610, 612 the UE based on the current capabilities. In an embodiment, the RAN node may send two configurations corresponding to each of the primary and secondary capabilities and indicate to the UE which capability to use, presently the secondary capability.

In the event the capability required by the UE changes, for example from secondary to primary because USIM-B moves from connected to idle state (or from connected to idle/inactive state) 614, the UE is configured to transmit an RRC Assistance Information message 616 which indicates to the RAN node that the primary capability is activated.

If the RAN node in this situation does not have primary capabilities yet, the RAN node is configured to request primary capabilities from the AMF using a NGAP message NGAP UE Capability request 618, for example, and receive the response prepared 620 by AMF in an NGAP UE Capability response 622 with primary capabilities.

The RAN node may then reconfigure 624, 626 the UE to take advantage of increased capabilities.

In the event the capability required by the UE changes, for example from primary capability to secondary capability because USIM-B moves from idle back to connected state (or from idle/inactive back to connected state) 628, the UE is configured to transmit again the RRC Assistance Information 630 which indicates to the RAN node that the secondary capability is activated.

In this case, the RAN node may have the secondary capability in memory and may reconfigure 632, 634 the UE to use the secondary capability. The same naturally applies to the earlier change 614 as well if the RAN node has the primary capability in memory.

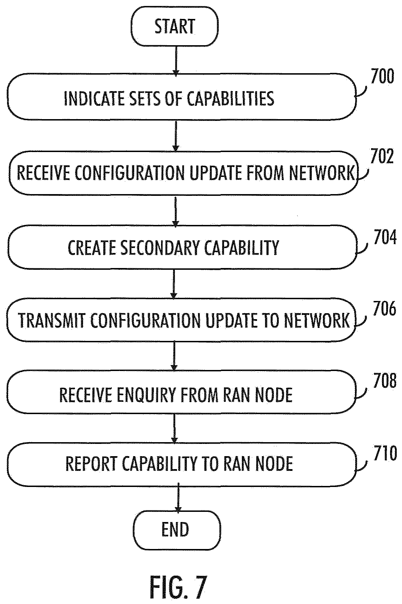

The flowchart of Fig. 7 illustrates an embodiment. The flowchart illustrates an example of the operation of an apparatus. In an embodiment, the apparatus may be a MUSIM user equipment 200, a part of a MUSIM user equipment or any other apparatus capable of executing following steps. The flowchart illustrates an example where the user equipment informs the network about its secondary capability.

In step 700, the user equipment is configured to indicate the presence of a secondary capability to network, for example to AMF of the network. In an embodiment, the UE transmits a Registration Request or any other NAS or RRC message where the information about the secondary capability is included.

In step 702, the user equipment is configured to receive from AMF a NAS message, such as a Configuration Update message, with an assistance information, MinimumCapability, on how to create secondary capabilities.

In step 704, the user equipment is configured to create secondary capability in compliance with MinimumCapability and then acknowledge 706 to AMF the configuration update command with a NAS Configuration Update Complete message.

In step 708, the user equipment is configured to receive an RRC UE capability enquiry message from RAN node requesting to report the secondary capabilities.

As a response to the enquiry, the user equipment is configured to, in step 710, transmit the secondary capability information in an RRC UE Capability Information message. The RAN node may then reconfigure the user equipment with radio configuration corresponding to the reported secondary capability.

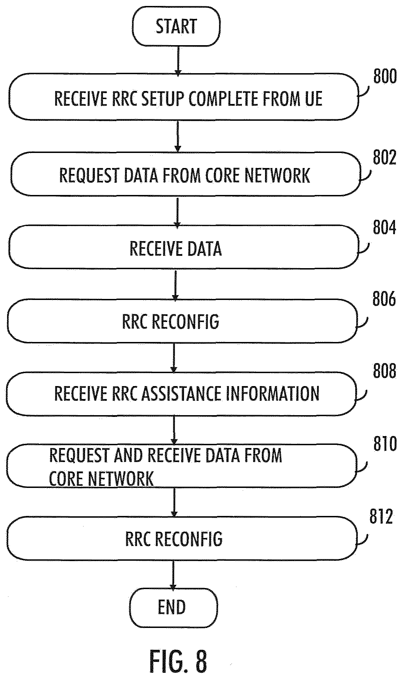

The flowchart of Fig. 8 illustrates an embodiment. The flowchart illustrates an example of the operation of an apparatus. In an embodiment, the apparatus may be a RAN node 206, a part of a RAN node or any other apparatus capable of executing following steps. The flowchart illustrates example of the operation of a RAN node for handling secondary capability of user equipment.

In step 800, the RAN node receives from user equipment an RRC setup complete message which tells the RAN node that current capability of the user equipment is secondary capability during transition from idle to connected state (or from idle/inactive to connected state).

In step 802, the RAN node transmits to AMF message, requesting the AMF to send secondary capabilities in an NGAP: Initial Context Setup Request message.

In step 804, the RAN node receives the NGAP: Initial Context Setup Request message.

In an embodiment, where the secondary capabilities are already available at the RAN node, the steps 802 and 804 need not be performed.

In step 806, the RAN node reconfigures the user equipment based on the received secondary capabilities.

In step 808, the RAN node receives an RRC message, such as an RRC Assistance Information message, from the user equipment, indicating that capability in the user equipment changes to primary capability, for example due to USIM-B moving from connected to idle state (or from connected to idle/inactive state).

In step 810, the RAN node is configured to request primary capability using an NGAP UE Capability Request message and receive the capability in an NGAP UE Capability Response message.

In an embodiment, where the primary capability is already available at the RAN node, the step 810 need not be performed.

In step 812, the RAN node is then configured to reconfigure the user equipment based on the primary capability.

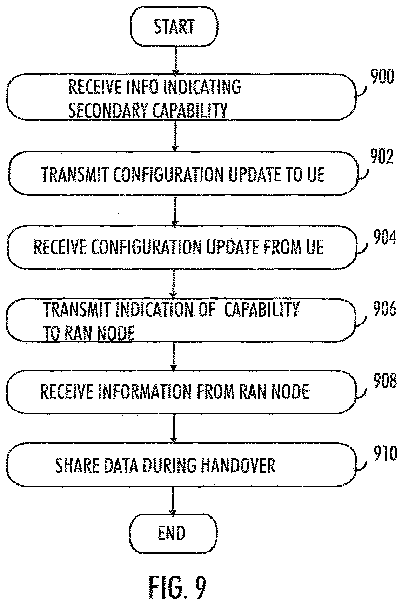

The flowchart of Fig. 9 illustrates an embodiment. The flowchart illustrates an example of the operation of an apparatus. In an embodiment, the apparatus may be a Core Access and Mobility Management Function, AMF, of a network, a part of an AMF or any other apparatus capable of executing following steps. The flowchart illustrates example of the operation of the AMF for handling secondary capability of user equipment.

In step 900, the AMF receives a message indicating that user equipment has a secondary capability. In an embodiment, the AMF receives MUSIM Assistance Information in a NAS message such as a registration request message.

In step 902, the AMF transmits a message, such a NAS UE configuration update command message, comprising MinimumCapability field for creating secondary capabilities.

In step 904, the AMF receives a message such as a UE configuration update complete message from the user equipment indicating that the secondary capabilities have been created.

In step 906, the AMF transmits the information about the presence of secondary capabilities to a RAN node.

In step 908, the AMF receives and stores information on secondary capabilities from the RAN node.

In step 910, the AMF, in connection with user equipment handover to a new RAN node or during transition from idle to connected state (or from idle/inactive to connected state), transmits information on secondary capabilities of the user equipment to the new RAN node.

In an embodiment, for a user equipment, two types of transitions may be considered for a change in the capability (selected from the primary or secondary capabilities) to be used: a transition of a first type from/to (RRC_IDLE or RRC_INACTIVE) to/from RRC_CONNECTED and a transition of a second type from/to RRC_IDLE to/from RRC_CONNECTED.

With the transition of the first type, whenever the UE leaves or enters the RRC_CONNECTED state for one of the subscriptions, including when the UE moves to RRC_INACTIVE state, then a change in the used capability is notified.

With the transition of the second type, whenever the UE leaves or enter the RRC_IDLE state for one of the subscription, then a change in the used capability is notified, yet no change is notified if the UE switches between RRC_INACTIVE and RRC_CONNECTED states.

In an embodiment, the use of the transition of the first type makes the most efficient use of the UE capability, meaning also using the full primary capability when the other subscription is in RRC_INACTIVE state. Yet there is more RRC signalling overhead as the switching between RRC_CONNECTED and RRC_INACTIVE state would cause a switch of the used capability.

In an embodiment, the use of transition of the second type would reduce the number of capability switching and corresponding RRC re-configurations, yet at the expense of using the reduced secondary capability with RRC_INACTIVE state although the full primary capability could have been used.

In an embodiment, the AMF may indicate which type of transition (the first type or the second type) the UE shall use. In an embodiment, the AMF may utilise a Boolean indicator, for instance together when sending the minimum requirements for the secondary capability to the UE in step 902 above.

In an embodiment, the RAN node may also indicate which type of transition to use during an RRC establishment or RRC re-configuration procedure, for instance based on its current RRC signalling load.

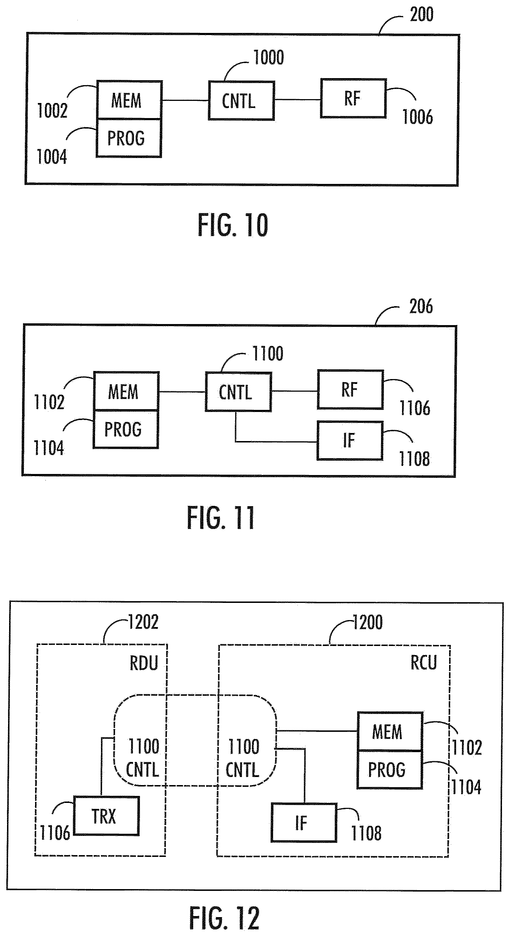

Fig. 10 illustrates an embodiment. The figure illustrates a simplified example of an apparatus applying embodiments of the invention. In some embodiments, the apparatus may be user equipment, a terminal, or a part of user equipment maintaining in the user equipment more than one subscription identities.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus 700 of the example includes a control circuitry 1000 configured to control at least part of the operation of the apparatus.

The apparatus may comprise a memory 1002 for storing data. Furthermore, the memory may store software 1004 executable by the control circuitry 1000. The memory may be integrated in the control circuitry.

The apparatus may comprise one or more interface circuitries 1006, The interface circuitries are operationally connected to the control circuitry 1000. An interface circuitry 1006 may be a set of transceivers configured to communicate with a RAN node, such as an (e/g)NodeB of a wireless communication network. The interface circuitry 1006 has the capability to support multiple subscription identities. In an embodiment, the interface may support more than one of the subscription identities to be in an RRC_connected state at the same time. The interface circuitry may be connected to an antenna arrangement (not shown). The apparatus may also comprise a connection to a transmitter instead of a transceiver. The apparatus may further comprise a user interface.

In an embodiment, the software 1004 may comprise a computer program comprising program code means adapted to cause the control circuitry 1000 of the apparatus to realise at least some of the embodiments described above.

Fig. 11 illustrates an embodiment. The figure illustrates a simplified example of an apparatus or network element applying embodiments of the invention. In some embodiments, the apparatus may be a RAN node, such as an (e/g)NodeB or a part of a RAN node.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus 206 of the example includes a control circuitry 1100 configured to control at least part of the operation of the apparatus.

The apparatus may comprise a memory 1102 for storing data. Furthermore, the memory may store software 1104 executable by the control circuitry 1100. The memory may be integrated in the control circuitry.

The apparatus further comprises one or more interface circuitries 1106, 1108 configured to connect the apparatus to other devices and network elements of the radio access network. An interface circuitry 1106 may be a set of transceivers configured to communicate with user terminals. An interface circuitry 1108 may be a set of transceivers configured to communicate with other network elements such as a core network. The interfaces may provide wired or wireless connections.

In an embodiment, the software 1106 may comprise a computer program comprising program code means adapted to cause the control circuitry 1100 of the apparatus to realise at least some of the embodiments described above.

In an embodiment, as shown in Fig. 12, at least some of the functionalities of the apparatus of Fig. 11 may be shared between two physically separate devices, forming one operational entity. Therefore, the apparatus may be seen to depict the operational entity comprising one or more physically separate devices for executing at least some of the described processes. Thus, the apparatus of Fig. 11, utilizing such shared architecture, may comprise a remote control unit RCU 1200, such as a host computer or a server computer, operatively coupled (e.g. via a wireless or wired network) to a remote distributed unit RDU 1202 located in the base station. In an embodiment, at least some of the described processes may be performed by the RCU 1200. In an embodiment, the execution of at least some of the described processes may be shared among the RDU 1202 and the RCU 1200.

In an embodiment, the RCU 1200 may generate a virtual network through which the RCU 1200 communicates with the RDU 1202. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the RCU). External network virtualization is targeted to optimized network sharing. Another category is internal virtual networking which provides network-like functionality to the software containers on a single system. Virtual networking may also be used for testing the terminal device.

In an embodiment, the virtual network may provide flexible distribution of operations between the RDU and the RCU. In practice, any digital signal processing task may be performed in either the RDU or the RCU and the boundary where the responsibility is shifted between the RDU and the RCU may be selected according to implementation.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, processing system or a circuitry which may comprise a working memory (random access memory, RAM), a central processing unit (CPU), and a system clock. The CPU may comprise a set of registers, an arithmetic logic unit, and a controller. The processing system, controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

In an embodiment, user equipment comprises at least one processor; and at least one memory including computer program code, the at least one memory and computer program code configured to, with the at least one processor, cause the apparatus to perform: maintain a primary capability to be used when one subscription identity of the user equipment is active and a secondary capability to be used when more than one subscription identity of the user equipment is active and transmit, based on Radio Resource Connection status of one or more subscription identities of the user equipment, to a Radio Access Network (RAN) node the user equipment is connected to, an indication as to which capability selected from the primary or secondary capability is to be used.

In an embodiment, a Radio Access Network RAN node comprises at least one processor; and at least one memory including computer program code, the at least one memory and computer program code configured to, with the at least one processor, cause the apparatus to perform: receive from a user equipment an indication of a primary or secondary capability to be used based on Radio Resource Connection status of one or more subscription identities of the user equipment and transmit to the user equipment a Radio Resource Control reconfiguration message in accordance with the capability to be used.

In an embodiment, a network element comprises at least one processor; and at least one memory including computer program code, the at least one memory and computer program code configured to, with the at least one processor, cause the apparatus to perform: receive from a user equipment an indication that the user equipment is able to communicate using more than one capability and transmit to the user equipment minimum requirements for a secondary capability.

It will be obvious to a person skilled in the art that, as the technology advances, the inventive concept can be implemented in various ways. The invention and its embodiments are not limited to the examples described above but may vary within the scope of the claims.

### Supporting paragraphs

There now follows a set of numbered example embodiments that set out further aspects of the present disclosure:
Embodiment 1. A user equipment, comprising means configured to:
   maintain a primary capability to be used when one subscription identity of the user equipment is active and a secondary capability to be used when more than one subscription identity of the user equipment is active;
   transmit, based on Radio Resource Connection status of one or more subscription identities of the user equipment, to a Radio Access Network (RAN) node the user equipment is connected to, an indication as to which capability selected from the primary or secondary capability is to be used.
Example 2. The user equipment according to embodiment 1, wherein the means are further configured to:
   indicate to a network that the user equipment is able to communicate using more than one capability;
   receive from the network minimum requirements for a secondary capability;
   create the secondary capability based on the minimum requirements received from the network.
Example 3. The user equipment according to embodiment 1, wherein the means are further configured to:
   receive from the RAN node at least one Radio Resource Control reconfiguration message in accordance with the capability to be used.
Example 4. The user equipment according to embodiment 1, wherein the means are further configured to:
   transmit the indication to the RAN node whenever the capability to be used is changed based on new Radio Resource Connection status of the one or more subscription identities.
Example 5. The user equipment according to embodiment 4, wherein the indication comprises an enumerated value indicating which capability is to be used.
Example 6. The user equipment according to embodiment 2, wherein the secondary capability is created based on one or more of the following: processor and memory capabilities of the user equipment, radio frequency capabilities of the user equipment, physical layer capabilities of the user equipment, protocol layer capabilities of the user equipment.
Example 7. The user equipment according to embodiment 2, wherein the minimum requirements are based on subscription profiles of the one or more subscription identities.
Example 8. A Radio Access Network RAN node comprising means configured to:
   receive from a user equipment an indication of a primary or secondary capability to be used based on Radio Resource Connection status of one or more subscription identities of the user equipment;
   transmit to the user equipment a Radio Resource Control reconfiguration message in accordance with the capability to be used.
Example 9. The Radio Access Network RAN node defined in paragraph 8, wherein the means are further configured to:
   transmit data on the capability to be used to network.
Example 10. The Radio Access Network RAN node defined in paragraph 8, wherein the indication comprises an enumerated value indicating which capability is to be used.
Example 11. The Radio Access Network RAN node defined in paragraph 8, wherein the means are further configured to receive the primary or secondary capability from the user equipment, and to forward the received capability to a network.
Example 12. A network element comprising means configured to:
   receive from a user equipment an indication that the user equipment is able to communicate using more than one capability;
   transmit to the user equipment minimum requirements for a secondary capability.
Example 13. The network element according to embodiment 12, wherein the means are further configured to:
   receive from a Radio Access Network node and store information on primary and secondary capabilities of a user equipment;
   transmit to the RAN node information on primary or secondary capability in connection with handover or initial context setup of the user equipment.
Example 14. A method for use in a user equipment, comprising:
   maintaining a primary capability to be used when one subscription identity of the user equipment is active and a secondary capability to be used when more than one subscription identity of the user equipment is active;
   transmitting, based on Radio Resource Connection status of one or more subscription identities of the user equipment, to a Radio Access Network (RAN) node the user equipment is connected to, an indication as to which capability selected from the primary or secondary capability is to be used.
Example 15. A method for use in a Radio Access Network RAN node, comprising:
   receiving from a user equipment an indication of a primary or secondary capability to be used based on Radio Resource Connection status of one or more subscription identities of the user equipment;
   transmitting to the user equipment the Radio Resource Control reconfiguration message in accordance with corresponding to the capability to be used.
Example 16. A method for use in a network element comprising:
   receiving from a user equipment an indication that the user equipment is able to communicate using more than one capability;
   transmitting to the user equipment minimum requirements for a secondary capability.
Example 17. A computer program comprising instructions for causing user equipment to at least perform:
   maintain a primary capability to be used when one subscription identity of the user equipment is active and a secondary capability to be used when more than one subscription identity of the user equipment is active;
   transmit, based on Radio Resource Connection status of one or more subscription identities of the user equipment, to a Radio Access Network (RAN) node the user equipment is connected to, an indication as to which capability selected from the primary or secondary capability is to be used.
Example 18. A computer program comprising instructions for causing a Radio Access Network RAN node to at least perform:
   receive from a user equipment an indication of a primary or secondary capability to be used based on Radio Resource Connection status of one or more subscription identities of the user equipment;
   transmit to the user equipment the Radio Resource Control reconfiguration message in accordance with corresponding to the capability to be used.
Example 19. A computer program comprising instructions for causing user equipment to at least perform:
   receive from a user equipment an indication that the user equipment is able to communicate using more than one capability;
   transmit to the user equipment minimum requirements for a secondary capability.

## Claims

1. A user equipment (200), comprising means (1000-1006) configured to:
maintain (300) a primary capability to be used when one subscription identity of the user equipment is active and a secondary reduced capability to be used when more than one subscription identity of the user equipment is active;
indicate, to a network (202), that the user equipment is able to communicate using more than one capability;
receive, from the network, minimum requirements for the secondary reduced capability;
create the secondary reduced capability based on the minimum requirements received from the network;
transmit (302, 616, 630), based on Radio Resource Connection, RRC, status of one or more subscription identities of the user equipment, to a Radio Access Network, RAN, node (206) the user equipment is connected to, an indication as to which capability selected from the primary capability or the secondary reduced capability is to be used, wherein the indication to the RAN node is transmitted when the capability to be used is changed based on new RRC status of the one or more subscription identities; and
receive (626, 634), from the RAN node, at least one RRC reconfiguration message in accordance with the capability to be used.

2. The user equipment of claim 1, wherein the indication comprises an enumerated value indicating which capability is to be used.

3. The user equipment of claim 1, wherein the secondary reduced capability is created based on one or more of the following: processor and memory capabilities of the user equipment, radio frequency capabilities of the user equipment, physical layer capabilities of the user equipment, protocol layer capabilities of the user equipment.

4. The user equipment of claim 1, wherein the minimum requirements are based on subscription profiles of the one or more subscription identities.

5. A Radio Access Network, RAN, node (206) comprising means (1100-1108) configured to:
receive, from a user equipment (200), a first indication that the user equipment is able to communicate using more than one capability comprising a primary capability to be used when one subscription identity of the user equipment is active and a secondary reduced capability to be used when more than one subscription identity of the user equipment is active;
transmit, to the user equipment, minimum requirements for the secondary reduced capability for update of the secondary reduced capability by the user equipment;
receive (400, 616, 630), from the user equipment, and based on RRC status of one or more subscription identities of the user equipment, a second indication as to which capability selected from the primary capability or the secondary reduced capability is to be used, wherein the second indication is received when the capability to be used is changed based on new RRC status of the one or more subscription identities; and
transmit (402, 626, 634), to the user equipment, at least one RRC reconfiguration message in accordance with the capability to be used.

6. The RAN node of claim 5, wherein the means are further configured to:
transmit data on the capability to be used to a network (202).

7. The RAN node of claim 5, wherein the second indication comprises an enumerated value indicating which capability is to be used.

8. The RAN node of claim 5, wherein the means are further configured to receive the primary capability or the secondary reduced capability from the user equipment, and to forward the received capability to a network.

9. A method for use in a user equipment (200), comprising:
maintaining (300) a primary capability to be used when one subscription identity of the user equipment is active and a secondary reduced capability to be used when more than one subscription identity of the user equipment is active;
indicating, to a network (202), that the user equipment is able to communicate using more than one capability;
receiving, from the network, minimum requirements for the secondary reduced capability;
creating the secondary reduced capability based on the minimum requirements received from the network;
transmitting (302, 616, 630), based on Radio Resource Connection, RRC, status of one or more subscription identities of the user equipment, to a Radio Access Network, RAN, node (206) the user equipment is connected to, an indication as to which capability selected from the primary capability or the secondary reduced capability is to be used, wherein the indication to the RAN node is transmitted when the capability to be used is changed based on new RRC status of the one or more subscription identities; and
receiving (626, 634), from the RAN node, at least one RRC reconfiguration message in accordance with the capability to be used.

10. A method for use in a Radio Access Network, RAN, node (206), comprising:
receiving, from a user equipment (200), a first indication that the user equipment is able to communicate using more than one capability comprising a primary capability to be used when one subscription identity of the user equipment is active and a secondary reduced capability to be used when more than one subscription identity of the user equipment is active;
transmitting, to the user equipment, minimum requirements for the secondary reduced capability for update of the secondary reduced capability by the user equipment;
receiving (400, 616, 630), from the user equipment, and based on RRC status of one or more subscription identities of the user equipment, a second indication as to which capability selected from the primary capability or the secondary reduced capability is to be used, wherein the second indication is received when the capability to be used is changed based on new RRC status of the one or more subscription identities; and
transmitting (402, 626, 634), to the user equipment, at least one RRC reconfiguration message in accordance with the capability to be used.

11. A computer program (1004) comprising instructions for causing user equipment (200) to at least perform:
maintain (300) a primary capability to be used when one subscription identity of the user equipment is active and a secondary reduced capability to be used when more than one subscription identity of the user equipment is active;
indicate, to a network (202), that the user equipment is able to communicate using more than one capability;
receive, from the network, minimum requirements for the secondary reduced capability;
create the secondary reduced capability based on the minimum requirements received from the network;
transmit (302, 616, 630), based on Radio Resource Connection, RRC, status of one or more subscription identities of the user equipment, to a Radio Access Network, RAN, node (206) the user equipment is connected to, an indication as to which capability selected from the primary capability or secondary reduced capability is to be used, wherein the indication to the RAN node is transmitted when the capability to be used is changed based on new RRC status of the one or more subscription identities; and
receive (626, 634), from the RAN node, at least one RRC reconfiguration message in accordance with the capability to be used.

12. A computer program (1104) comprising instructions for causing a Radio Access Network, RAN, node (206) to at least perform:
receive, from a user equipment (200), a first indication that the user equipment is able to communicate using more than one capability comprising a primary capability to be used when one subscription identity of the user equipment is active and a secondary reduced capability to be used when more than one subscription identity of the user equipment is active;
transmit, to the user equipment, minimum requirements for the secondary reduced capability for update of the secondary reduced capability by the user equipment;
receive (400, 616, 630), from the user equipment, and based on RRC status of one or more subscription identities of the user equipment, a second indication as to which capability selected from the primary capability or secondary reduced capability is to be used, wherein the second indication is received when the capability to be used is changed based on new RRC status of the one or more subscription identities; and
transmit (402, 626, 634) to the user equipment, at least one RRC reconfiguration message in accordance with the capability to be used.
